# NEUE EUROPÄISCHE PATENTSCHRIFT

(11) **EP 1 905 914 B2**
(45) Veröffentlichungstag und Bekanntmachung des Hinweises auf die Entscheidung über den Einspruch: **20.04.2016**
(45) Hinweis auf die Patenterteilung: 12.10.2011
(21) Anmeldenummer: 07016177.3
(22) Anmeldetag: 17.08.2007
(51) Int. Cl.: E04B 2/16, C04B 38/06

(54) **Verfahren zum Wärmedämmen von Gebäuden**
Method of insulating buildings
Procédé pour isoler des bâtiments

(30) Priorität: 18.08.2006 DE 202006012748 U
(43) Veröffentlichungstag der Anmeldung: 02.04.2008
(60) Teilanmeldung: 08019195.0
(73) Patentinhaber: Schlagmann Baustoffwerke GmbH & Co. KG, 84367 Zeilarn (DE)
(72) Erfinder: Edmüller, Johannes, 84367 Zeilarn (DE)
(74) Vertreter: Hoffmann Eitle

(56) Entgegenhaltungen:
- EP-A- 0 012 407
- EP-A- 0 201 757
- DE-A- 2 908 466
- DE-A-102004 043 494
- DE-A1- 1 483 702
- DE-A1- 19 807 040
- DE-B- 1 126 302
- DE-U- 7 502 996
- DE-U1-202005 000 723

## Beschreibung

### Technisches Gebiet

Die Erfindung betrifft ein Verfahren zum Wärmedämmen von Gebäuden.

### Stand der Technik

Wärmedämmziegel aus einem gebrannten Ziegelmaterial mit einer Mehrzahl von Hochlöchern sind hinlänglich bekannt. Diese müssen eine Vielzahl von Anforderungen erfüllen, beispielsweise hinsichtlich Wärmedämmung, Schalldämmung, Standsicherheit, Brandschutz etc., die teilweise im Widerspruch zueinander stehen. Die steigenden Anforderungen an eine gute Wärmedämmung haben mehr und mehr dazu geführt, dass bekannte Wärmedämmziegel immer filigraner ausgeführt wurden, um die Wärmedurchgangsflächen und somit den Wärmedurchgang zu minimieren. Hierdurch wird jedoch nicht nur die Tragfähigkeit, sondern auch das Schalldämmmaß beeinträchtigt, sodass sich derartige Ziegel nicht für alle Anwendungen eignen.

Die DE 75 02 996 U1 zeigt einen Isolierstein für Außenwandflächen, mit senkrechten äußeren Lüftungskanälen und im Raum zwischen Lüftungskanälen und Mauerwerk vorgesehenen Isoliermassen, wobei die Lüftungs- und die Isolierräume beide als senkrechte Kanäle in einem gemeinsamen, nach der Mauerseite hin geschlossenen Bauelement untergebracht sind.

Ferner offenbart die DE 20 2005 000 723 U1 einen Wärmdämmziegel, bei welchem das gebrannte Ziegelmaterial eine Wärmeleitfähigkeit von 0,27 W/(m*K) aufweist.

Zum nachträglichen oder gegebenenfalls auch anfänglichen Wärmedämmen von Gebäuden kommen verbreitet sogenannte Wärmedämmverbundsysteme (vgl. DIN 18345) zum Einsatz, bei denen Dämmplatten aus Polystyrol oder dergleichen auf der Außenseite von Gebäudeaußenwänden angewendet werden. Allerdings weisen derartige Wärmedämmverbundsysteme wesentliche Nachteile auf, wie beispielsweise Tauwasserausfall mit nachfolgender Putzabplatzung, Neigung zu Veralgung, Brandrisiko, Rissbildungen und geringe mechanische Stabilität. Ferner wird auch das Wohnklima von Wärmedämmverbundsystemen als unangenehm empfunden.

Ferner offenbart die EP-A-0 201 757 eine Fassadenbekleidung mit einer Dämmschicht aus wärmeisolierendern Material, die an einer vorhandenen Außenwand eingebracht und durch eine Ziegelverblendschale verblendet wird.

Als weiterer Stand der Technik ist das Dokument DE 10 2004 043 494 A1 bekannt, das eine Ziegelmanteldämmplatte (ZMD-Platte) betrifft. Gemäß diesem Dokument wird ein Wärmedämmsiegel aus gebranntem Ziegelmaterial offenbart, wobei in jeder Stoßfläche der ZMD-Platte Stoßfugenverzahmungen vorgesehen sind. Die Stege der ZMD-Platte, die beim Versetzen in Wärmestromrichtung verlaufen, sollten auf eine minimale Stegdicke von 5 mm bis maximal 8 mm bemessen sein, um die Wärmebrücken, welche durch die Ziegelscherbenleitfähigkeit mit Werten von 0,33 bis minimal 0,2 W/mK hervorgerufen werden, möglichst gering zu halten.

### Darstellung der Erfindung

Es ist daher Aufgabe der Erfindung, ein Verfahren zum Wärmedämmen von Gebäuden bereitzustellen, das bei guter Wärmedämmung und guter Schalldämmung die Nachteile von Wärmedämmverbundsystemen vermeidet oder zumindest verringert.

Diese Aufgabe wird erfindungsgemäß durch ein Verfahren zum Wärmedämmen von Gebäuden nach Anspruch 1 gelöst. Besonders vorteilhafte Weiterbildungen der Erfindung sind Gegenstand der abhängigen Ansprüche.

Das erfindungsgemäße Verfahren zum Wärmedämmen ermöglicht somit, erstmals in Einsatzbereiche der Gebäudesanierung vorzudringen, die bisher sogenannten Wärmedämmverbundsystemen und dergleichen vorbehalten waren. Dabei lassen sich durch das erfindungsgemäße Verfahren zum Wärmedämmen von Gebäuden wesentliche Nachteile von Wärmedämmverbundsystemen vermeiden, wie beispielsweise Tauwasserausfall mit nachfolgender Putzabplatzung, Neigung zur Veralgung, Brandrisiko, Rissbildungen und geringe mechanische Stabilität. Nicht zuletzt ermöglicht das erfindungsgemäße Verfahren ein angenehmeres Wohnklima als viele Wärmedämmverbundsysteme.

Dabei ist es besonders bevorzugt, dass beim erfindungsgemäßen Verfahren die Wärmedämmziegel mit der Außenseite der Außenwand über Verankerungselemente und/oder Haftmittel verbunden werden, um einen stabilen Verbund und eine dauerhafte Wärmedämmung zu erzielen. Ferner ist gemäß einer Weiterbildung der Erfindung vorgesehen, dass die Außenseite der Außenwand vor dem Anordnen der Wärmedämmziegel mit einer Egalisationsschicht versehen wird. Auch dies trägt nicht nur zu einer stabilen und dauerhaften Ziegelschale, sondern auch zu einer günstigen Wärmedämmung bei.

Beim Einsatz eines Wärmedämmziegels kann die Verminderung der Wärmeleitfähigkeit im Rahmen der Erfindung auf unterschiedlichste Art und Weise erfolgen. Dabei ist es jedoch vorgesehen, dass sich die verbesserte (verminderte) Wärmeleitfähigkeit aus einer erhöhten Porosierung des gebrannten Ziegelmaterials ergibt. Zu diesem Zweck ist es gemäß der vorliegenden Erfindung vorgesehen, dass das Ziegelmaterial 15 bis 36 Volumen-%, bevorzugt 19 bis 29 Volumen-% porosierendes Material, bevorzugt Kunststoffmaterial aufweist. Dieses Material verbrennt beim Brennvorgang des Ziegels zumindest teilweise und hinterlässt eine entsprechende Porosierung.

Dabei hat es sich im Hinblick auf eine gleichmäßige Porosierung als vorteilhaft erwiesen, dass das porosierende (Kunststoff-)Material einen Korndurchmesser von höchstens 1,5 mm aufweist.

Das porosierende (Kunststoff-)Material kann im Rahmen der vorliegenden Erfindung aus einer Vielzahl unterschiedlicher Stoffe ausgewählt sein. Im Hinblick auf eine einfache Verarbeitung und eine hohe Dauerhaftigkeit hat es sich jedoch als vorteilhaft erwiesen, dass das porosierende (Kunststoff-)Material ausgewählt ist aus Styropor, Maismehlgranulat und Kohlegranulat.

Weitere Maßnahmen, die eine Verbesserung (Verminderung) der Wärmeleitfähigkeit ermöglichen, ohne die übrigen Eigenschaften des Wärmedämmziegelszu beeinträchtigen oder die Herstellung aufwändiger zu machen, sind Gegenstand der Ansprüche 8 bis 10. Dabei ist zu beachten, dass unter "Ziegelmaterial" im Rahmen der vorliegenden Erfindung, soweit nicht anders angegeben, das ungebrannte Material zu verstehen ist.

Obgleich beim erfindungsgemäßen Verfahren zum Wärmedämmen der eingesetzte Wärmedämmziegel bereits unverfüllt eine ausgezeichnete Wärmedämmung bietet, ist gemäß einer Weiterbildung der Erfindung vorgesehen, dass zumindest eines der Hochlöcher zumindest teilweise mit einem Wärmedämmmaterial verfüllt ist. Hierdurch lassen sich die Wärmedämmungseigenschaften weiter optimieren, und zwar bei gleichzeitiger Verbesserung des Schalldämmmaßes, da das Wärmedämmmaterial auch dämpfende Eigenschaften besitzt.

Hierdurch lassen sich beispielsweise Wärmedämmziegel für das erfindungsgemäße Verfahren bereitstellen, die auch bei sehr geringer Breite ein ausreichendes Wärmedämmvermögen aufweisen. Derartige, schmale Wärmedämmziegel eignen sich hervorragend zur erfindungsgemäßen Herstellung einer hochwärmedämmenden, nachträglichen Ziegelfassade bei Altbauten, da sie wenig Bauraum beanspruchen und das Gesamterscheinungsbild des Gebäudes kaum verändern, insbesondere im Bereich von Fenstern, Türen etc. Dies gilt insbesondere, wenn das Wärmedämmmaterial ausgewählt ist aus Perlite-Leichtzuschlag, Nanogel, hochdisperser Kieselsäure (HDK), Vakuumisolationselementen, Infrarotblocker und Kombinationen hiervon.

Gemäß einer Weiterbildung der Erfindung ist vorgesehen, dass HDK als Schüttgut mit oder ohne Umhüllung in mindestens einem Hochloch angeordnet ist. Hierdurch ergibt sich ein besonders wirtschaftlicher und zuverlässiger Herstellungsvorgang. Dabei ist es bevorzugt, dass die HDK eine Dichte von mindestens 100 kg/m³, bevorzugt mindestens 120 kg/m³ besitzt, so dass der fertig gestellte Wärmedämmziegel bei Bedarf zugeschnitten werden kann, beispielsweise für den Rand- und Eckbereich von Wänden.

Gemäß einer Weiterbildung der Erfindung ist ferner vorgesehen, dass der für das erfindungsgemäße Verfahren eingesetzte Wärmedämmziegel eine Mehrzahl von Querstegen aufweist, die sich im Wesentlichen parallel zu den Stoßflächen erstrecken, wobei die Summe der Querstegdicken höchstens 80 mm/m, bevorzugt höchstens 60 mm/m beträgt. Hierdurch lassen sich die Wärmedämmeigenschaften weiter optimieren, bzw. der Wärmedämmziegel kann bei gleicher Wärmedämmung noch schmaler ausgeführt werden, so dass er sich noch besser für die nachträgliche Wärmedämmung von Gebäude(außen)wänden eignet.

Dabei ist es besonders bevorzugt, dass mindestens ein Quersteg nach dem Brennen eines Rohlings für den Wärmedämmziegel entfernt ist. Auf diese Weise lassen sich gute Wärmedämmeigenschaften mit einem stabilen Strangpressen, Abtrennen und Brennen eines Ziegelrohlings vereinen.

Gemäß einer Weiterbildung der Erfindung ist vorgesehen, dass der für das erfindungsgemäße Verfahren eingesetzte Wärmedämmziegel in Richtung senkrecht zu den Stoßflächen eine Länge von mindestens 400 mm, bevorzugt mindestens 500 mm, und/oder dass er in Richtung parallel zu den Stoßflächen eine Breite von höchstens 160 mm, bevorzugt höchstens 130 mm besitzt. Mit diesen Abmessungen wird ein Wärmedämmziegel für das erfindungsgemäße Verfahren bereitgestellt, der sich bei guten Wärmedämmeigenschaften optimal für den Einsatz für die nachträgliche Wärmedämmung von Gebäude(außen)wänden eignet.

### Kurze Beschreibung der zeichnungen

Fig. 1 zeigt schematisch eine Draufsicht einer Ausführungsform eines Wärmedämmziegels;
Fig. 2 zeigt schematisch eine Draufsicht einer weiteren Ausführungsform eines Wärmedämmziegels;
Fig. 3 zeigt schematisch eine Perspektivansicht einer mit Wärmedämmziegeln nachträglich gedämmten Außenwand.

### Ausführliche Beschreibung bevorzugter Ausführungsformen

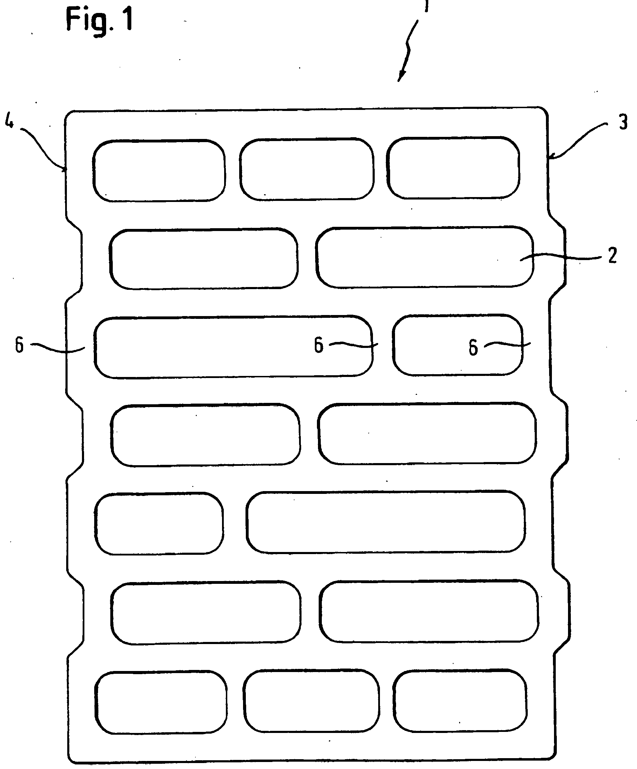

Bevorzugte Ausführungsformen der vorliegenden Erfindung werden nachfolgend ausführlich unter Bezugnahme auf Fig. 1 bis 3 beschrieben.

Fig. 1 zeigt schematisch eine Draufsicht eines Wärmedämmziegels 1. Der Wärmedämmziegel besteht aus einem gebrannten Ziegelmaterial und dient zur Erstellung von Mauerwerkstragwerken für Gebäude, insbesondere Wänden und dergleichen.

Wie in Fig. 1 zu erkennen ist, besitzt der Wärmedämmziegel eine Mehrzahl von Hochlöchern, die dazu vorgesehen sind, im eingebauten Zustand im Wesentlichen vertikal angeordnet zu sein. Ferner besitzt der Wärmedämmziegel in bekannter Weise zwei gegenüberliegende Stoßflächen 3,4, in denen jeweils eine Verzahnung mit Vorsprüngen bzw. Vertiefungen vorgesehen ist.

Das Ziegelmaterial des Wärmedämmziegels ist derart ausgewählt, dass es im gebrannten Zustand eine Wärmeleitfähigkeit von höchstens 0,27 W/(m*K) besitzt, wobei in der vorliegenden Ausführungsform eine Wärmeleitfähigkeit von 0,26 W/(m*K) vorliegt. Die Wärmeleitfähigkeit ist dabei an aus dem Wärmedämmziegel herausgeschnittenen Probekörpern (Ziegelscherben) nach DIN 52612-1: 1979/09 - Bestimmung der Wärmeleitfähigkeit mit dem Plattengerät; Durchführung und Auswertung - zu bestimmen.

Obgleich in Fig. 1 nicht gezeigt, können zumindest einige der Hochlöcher 2 vollständig oder teilweise mit einem Wärmedämmmaterial verfüllt sein, das beispielsweise aus einem Perlit-Leichtzuschlag oder einem anderen geeigneten Wärmedämmmaterial bestehen kann.

Um dies zu erreichen, kann als Ausgangsmaterial (vor dem Brennen) beispielsweise eine Standard-Tonbetriebsmasse mit folgenden Zusätzen verwendet werden:
- 20 Volumen-% porosierendes Kunststoffmaterial mit einer Korngröße von höchstens 1,5 mm;
- 6 Volumen-% Kalziumcarbonat;
- 1 Volumen-% Kohlenstoff;
- 5 Volumen-% Bindeton.

Durch diese Zusätze ergibt sich eine vorteilhaft verteilte Scherbenporosierung über den Nano-Mikro- und Millimeterbereich.

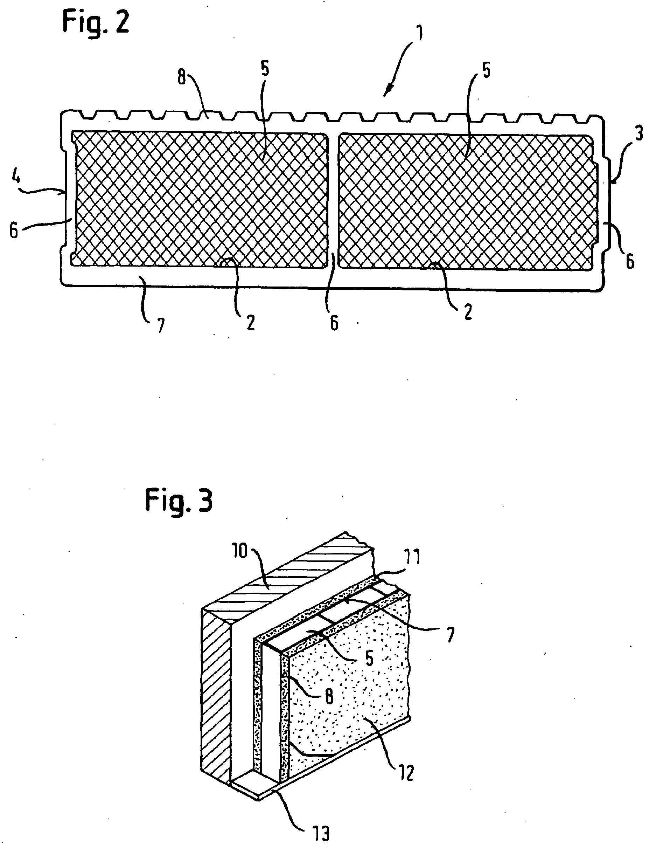

Eine zweite Ausführungsform des Wärmedämmziegels ist schematisch in Fig. 2 in einer Draufsicht gezeigt. Diese unterscheidet sich primär durch seine Abmessungen und die Anzahl der Hochlöcher 2 von dem in Fig. 1 gezeigten Wärmedämmziegel. Wie in Fig. 2 zu erkennen ist, weist der Wärmedämmziegel 1 in der vorliegenden Ausführungsform zwei Hochlöcher auf, wobei es im Rahmen der vorliegenden Erfindung ebenso möglich ist, dass der Wärmedämmziegel lediglich ein großes Hochloch 2 aufweist, beispielsweise indem einer der Querstege 6 nach dem Brennen entfernt wird. Auf diese Weise kann bei dem gezeigten Wärmedämmziegel 1 eine sehr geringe Gesamtsumme der Querstegdicken erzielt werden, die in der vorliegenden Ausführungsform 60 mm/m beträgt. Dabei betragen die Gesamtabmessungen des Wärmedämmziegels 1 in der vorliegenden Ausführungsform 500 mm x 130 mm (Länge x Breite), sodass sich der Wärmedämmziegel besonders gut für die nachträgliche Wärmedämmung von Gebäudeaußenwänden eignet.

Um auch bei einem derart schmalen Wärmedämmziegel ausreichende Wärmedämmeigenschaften zu erzielen, sind die Hochlöcher 2 des Wärmedämmziegels 1 mit einem Wärmedämmmaterial 5 verfüllt, das in der vorliegenden Ausführungsform ausgewählt ist aus Perlit-Leichtzuschlag, Nanogel, hochdisperser Kieselsäure (HDK), Vakuumisolationselementen, Infrarotblokker und Kombinationen hiervon. Genauer gesagt ist in der vorliegenden Ausführungsform HDK als Schüttgut mit einer sackartigen Umhüllung in dem jeweiligen Hochloch 2 angeordnet und besitzt eine Dichte von 130 kg/m³, sodass der Wärmedämmziegel bei Bedarf auch zugeschnitten werden kann.

Der Wärmedämmziegel 1 kann selbstverständlich zur Neuherstellung von Wänden oder anderen Gebäudeteilen verwendet werden. Ein erfindungsgemäßer Einsatz des Wärmedämmziegels ist jedoch in Fig. 3 schematisch dargestellt. Dabei wird der Wärmedämmziegel 1 zum nachträglichen Wärmedämmen einer bestehenden Außenwand 10 eines Gebäudes verwendet. Hierbei wird wie folgt vorgegangen.

Zunächst wird überprüft, ob die Außenwand 10 eine gleichmäßige Oberfläche besitzt, und es wird gegebenenfalls eine Egalisationsschicht 11 auf die Außenwand 10 aufgebracht. Anschließend wird eine Sockelschiene 13 im unteren Bereich der Außenwand 10 montiert, die als Träger für die aufzumauernden Wärmedämmziegel 1 dient. Anschließend werden die Wärmedämmziegel 1 aufgemauert, wobei die Wärmedämmziegel 1 überverschiedene Verankerungselemente wie Haken, Konsolen und dergleichen mit der Außenwand 10 verbunden werden können. Alternativ oder zusätzlich ist es ebenso möglich, die Innenseite 7 der Wärmedämmziegel 1 mittels einer Mörtel- oder Kleberschicht mit der Außenwand 10 bzw. Egalisationsschicht 11 zu verbinden.

Anschließend wird die Außenseite 8 mit einer Leichtputzschicht versehen, sodass sich eine fertige, nachträglich wärmegedämmte Außenwand mit einem ausgezeichneten Wärmedämmvermögen und sehr guten bauphysikalischen und baubiologischen Eigenschaften ergibt.

## Patentansprüche

1. Verfahren zum Wärmedämmen von Gebäuden unter Einsatz eines Wärmedämmziegels (1) aus einem gebrannten Ziegelmaterial, mit einem oder einer Mehrzahl von Hochlöchern (2) und mindestens zwei Stoßflächen (3, 4), in denen jeweils eine Verzahnung vorgesehen ist, wobei
das gebrannte Ziegelmaterial eine Wärmeleitfähigkeit von höchstens 0,27 W/(m*K), bevorzugt höchstens 0,26 W/(m*K) aufweist, wobei das Verfahren die Schritte aufweist:
Überprüfen und ggf. Vorbehandeln einer Außenwand (10) eines zu dämmenden Gebäudes,
Montieren einer Sockelschiene (13) im unteren Bereich der Außenwand (10) als Träger für die aufzumauernden Wärmedämmziegel (1), und
Anordnen einer Wärmedämmschale mit einer Mehrzahl der Wärmedämmziegel (1) auf einer Außenseite der Außenwand, wobei die Wärmedämmziegel (1) auf der Sockelschiene (13) aufgemauert werden, wobei das Ziegelmaterial 15 bis 36 Volumen-%, bevorzugt 19 bis 29 Volumen-%, porosierendes Material aufweist.

2. Verfahren nach Anspruch 1, **dadurch gekennzeichnet, dass** die Wärmedämmziegel mit der Außenseite der Außenwand über Verankerungselemente und/oder Haftmittel verbunden werden.

3. Verfahren nach Anspruch 1 oder 2, **dadurch gekennzeichnet, dass** die Außenseite der Außenwand vor dem Anordnen der Wärmedämmziegel mit einer Egalisationsschicht (11) versehen wird.

4. Verfahren nach einem der vorhergehenden Ansprüche, **dadurch gekennzeichnet, dass** das gebrannte Ziegelmaterial eine Wärmeleitfähigkeit von mindestens 0,22 W/(m*K), bevorzugt mindestens 0,24 W/(m*K) aufweist.

5. Verfahren nach Anspruch 1, **dadurch gekennzeichnet, dass** das porosierende Material einen Korndurchmesser von höchstens 1,5 mm ausweist.

6. Verfahren nach Anspruch 1 oder 5, **dadurch gekennzeichnet, dass** das porosierende Material ausgewählt ist aus Styropor, Maismehlgranulat und Kohlegranulat.

7. Verfahren nach einem der vorhergehenden Ansprüche, **dadurch gekennzeichnet, dass** das Ziegelmaterial 4 bis 8 Volumen-%, bevorzugt 5 bis 7 Volumen-% Kalziumkarbonat aufweist.

8. Verfahren nach einem der vorhergehenden Ansprüche, **dadurch gekennzeichnet, dass** das Ziegelmaterial 0,5 bis 1,5 Volumen-%, bevorzugt 0,8 bis 1,2 Volumen-% Kohlenstoff aufweist.

9. Verfahren nach einem der vorhergehenden Ansprüche, **dadurch gekennzeichnet, dass** das Ziegelmaterial 3 bis 7 Volumen-%, bevorzugt 4 bis 6 Volumen-% Bindeton aufweist.

10. Verfahren nach einem der vorhergehenden Ansprüche, **dadurch gekennzeichnet, dass** zumindest eines der Hochlöcher (2) zumindest teilweise mit einem Wärmedämmmaterial (5) verfüllt ist, das bevorzugt ausgewählt ist aus Perlite-Leichtzuschlag, Nanogel, hochdisperser Kieselsäure (HDK), Vakuumisolationselementen, Infrarotblocker und Kombinationen hiervon.

11. Verfahren nach Anspruch 10, **dadurch gekennzeichnet, dass** HDK als Schüttgut mit oder ohne Umhüllung in mindestens einem Hochloch (2) angeordnet ist und bevorzugt eine Dichte von mindestens 100 kg/m³, bevorzugt mindestens 120 kg/m³ besitzt.

12. Verfahren nach einem der vorhergehenden Ansprüche, **dadurch gekennzeichnet, dass** der Wärmedämmziegel (1) eine Mehrzahl von Querstegen (6) aufweist, die sich im wesentlichen parallel zu den Stoßflächen (3, 4) erstrecken, wobei die Summe der Querstegdicken höchstens 80 mm/m, bevorzugt höchstens 60 mm/m beträgt, wobei bevorzugt mindestens ein Quersteg nach dem Brennen eines Rohlings entfernt ist.

13. Verfahren nach einem der vorhergehenden Ansprüche, **dadurch gekennzeichnet, dass** der Wärmedämmziegel (1) in Richtung senkrecht zu den Stoßflächen (3, 4) eine Länge von mindestens 400 mm, bevorzugt mindestens 500 mm, und/oder dass er in Richtung parallel zu den Stoßflächen (3, 4) eine Breite von höchstens 160 mm, bevorzugt höchstens 130 mm besitzt.

## Claims

1. Method for heat insulation of buildings using a heat-insulating brick (1) made from a fired brick material, having one or a plurality of vertical perforations (2) and at least two abutting surfaces (3, 4), in which in each case teeth are provided, wherein
the fired brick material has a thermal conductivity of not more than 0.27 W/(m*K), preferably not more than 0.26 W/(m*K), wherein the method has the steps:
checking and optionally pre-treating an outer wall (10) of a building to be insulated,
assembling a base rail (13) in the lower region of the outer wall (10) as a support for the heat-insulating bricks (1) to be raised, and
arranging a heat-insulating shell having a plurality of heat-insulating bricks (1) on an outer side of the outer wall, wherein the heat-insulating bricks (1) are raised on the base rail (13), wherein the brick Material has 15 to 36 volume%, preferably 19 to 29 volume%, of porous-making material.

2. Method according to claim 1, **characterised in that** the heat-insulating bricks are joined to the outer side of the outer wall via anchoring elements and/or adhesives.

3. Method according to claim 1 or 2, **characterised in that** the outer side of the outer wall is provided with a levelling layer (11) before arrangement of the heat-insulating bricks.

4. Method according to one of the preceding claims, **characterised in that** the fired brick material has a thermal conductivity of at least 0.22 W/(m*K), preferably at least 0.24 W/(m*K).

5. Method according to claim 1, **characterised in that** the porous-making material has a grain diameter of not more than 1.5 mm.

6. Method according to claim 1 or 5, **characterised in that** the porous-making material is selected from polystyrene, corn meal granules and carbon granules.

7. Method according to one of the preceding claims, **characterised in that** the brick material has 4 to 8 volume%, preferably 5 to 7 volume%, of calcium carbonate.

8. Method according to one of the preceding claims, **characterised in that** the brick material has 0.5 to 1.5 volume%, preferably 0.8 to 1.2 volume%, of carbon.

9. Method according to one of the preceding claims, **characterised in that** the brick material has 3 to 7 volume%, preferably 4 to 6 volume%, of bonding clay.

10. Method according to one of the preceding claims, **characterised in that** at least one of the vertical perforations (2) is filled at least partly with a heat-insulating material (5) which is preferably selected from perlite lightweight aggregate, nanogel, highly dispersed silicic acid (HDK), vacuum-insulating elements, infrared blockers and combinations thereof.

11. Method according to claim 10, **characterised in that** HDK as bulk material with or without coating is arranged in at least one vertical perforation (2) and preferably has a density of at least 100 kg/m³, preferably at least 120 kg/m³.

12. Method according to one of the preceding claims, **characterised in that** the heat-insulating brick (1) has a plurality of transverse bars (6) which extend essentially parallel to the abutting surfaces (3, 4), wherein the sum of the transverse bar thicknesses is not more than 80 mm/m, preferably not more than 60 mm/m, wherein preferably at least one transverse bar is removed after firing a blank.

13. Method according to one of the preceding claims, **characterised in that** the heat-insulating brick (1) in a direction vertically to the abutting surfaces (3, 4) has a length of at least 400 mm, preferably at least 500 mm, and/or **in that** in a direction parallel to the abutting surfaces (3,4) it has a width of not more than 160 mm, preferably not more than 130 mm.

## Revendications

1. Procédé pour isoler thermiquement des bâtiments, faisant utilisation d'une brique d'isolation thermique (1) composée d'un matériau de brique cuit, avec un ou une pluralité de perforations verticales (2) et au moins deux faces de joint (3, 4), dans chacune desquelles est prévu une denture,
le matériau de brique cuit présente une conductibilité thermique maximale de 0,27 W/(m*K), de préférence maximale de 0,26 W/(m*K), le procédé présentant les étapes consistant à :
vérifier et, le cas échéant, prétraiter un mur extérieur (10) d'un bâtiment à isoler,
monter une glissière de socle (13) dans la zone inférieure du mur extérieur (10), en tant que support pour la brique d'isolation thermique (1) à maçonner,
agencer une coque d'isolation thermique avec une pluralité de briques d'isolation thermique (1) sur une face extérieure du mur extérieur, la brique d'isolation thermique (1) étant maçonnée sur la glissière de socle (13), le matériau de brique comprenant 15 à 36 % en volume, de préférence de 19 à 29 % en volume, de matériau porogène.

2. Procédé selon la revendication 1, **caractérisé en ce que** la brique d'isolation thermique est reliée à la face extérieure du mur extérieur par l'intermédiaire d'élément d'ancrage et/ou de moyens d'agrafage.

3. Procédé selon la revendication 1 ou 2, **caractérisé en ce que** la face extérieure du mur extérieur est munie d'une couche d'égalisation (11) avant l'agencement des briques d'isolation thermique.

4. Procédé selon l'une des revendications précédentes, **caractérisé en ce que** le matériau de brique cuit présente une conductibilité thermique d'au moins 0,22 W/(m*K), de préférence d'au moins 0,24 W/(m*K).

5. Procédé selon la revendication 1, **caractérisé en ce que** le matériau porogène présente un diamètre de grains maximal de 1,5 mm.

6. Procédé selon la revendication 1 ou 5, **caractérisé en ce que** le matériau porogène est sélectionné parmi le polystyrène expansé, un granulat de farine de mais et un granulat de charbon.

7. Procédé selon l'une des revendications précédentes, **caractérisé en ce que** le matériau de brique contient de 4 à 8 % en volume, de préférence de 5 à 7 % en volume, de carbonate de calcium.

8. Procédé selon l'une des revendications précédentes, **caractérisé en ce que** le matériau de brique contient de 0,5 à 1,5 % en volume, de préférence de 0,8 à 1,2 % en volume, de carbone.

9. Procédé selon l'une des revendications précédentes, **caractérisé en ce que** le matériau de brique contient de 3 à 7 % en volume, de préférence de 4 à 6 % en volume, de liant à l'argile.

10. Procédé selon l'une des revendications précédentes, **caractérisé en ce qu'**au moins l'une des perforations verticales (2) est remplie au moins partiellement d'un matériau d'isolation thermique (5), de préférence sélectionné parmi un additif léger à la perlite, un nanogel, de l'acide silicique fortement dispersé (HDK), des éléments d'isolation à vide, des bloqueurs d'infra-rouges et des combinaisons de ceux-ci.

11. Procédé selon la revendication 10, **caractérisé en ce que** le HDK est disposé, sous forme de produit en vrac, avec ou sans gainage, dans au moins une perforation verticale (2), et présente de préférence une masse volumique d'au moins 100 kg/m³, de préférence d'au moins 120 kg/m³.

12. Procédé selon l'une des revendications précédentes, **caractérisé en ce que** la brique d'isolation thermique (1) présente une pluralité de nervures transversales (6), s'étendant sensiblement parallèlement aux faces de joint (3, 4), la somme des épaisseurs de nervures transversales étant au maximum de 80 mm/m, de préférence au maximum de 60 mm/m, de préférence au moins une nervure transversale étant enlevée après cuisson d'une ébauche.

13. Procédé selon l'une des revendications précédentes, **caractérisé en ce que** la brique d'isolation thermique (1) présente, en direction perpendiculaire aux faces de joint (3, 4), une longueur d'au moins 400 mm, de préférence d'au moins 500 mm, et/ou présente, en direction parallèle aux faces de joint (3, 4) une largeur maximale de 160 mm, de préférence maximale de 130 mm.
